# EUROPÄISCHE PATENTSCHRIFT

(11) **EP 3 833 536 B1**
(45) Veröffentlichungstag und Bekanntmachung des Hinweises auf die Patenterteilung: **25.09.2024**
(21) Anmeldenummer: 19731717.5
(22) Anmeldetag: 17.06.2019
(51) Int. Cl.: B29C 64/35, B29C 64/124

(54) **VERFAHREN ZUR HERSTELLUNG EINES BAUTEILS MIT STEREOLITHOGRAPHIE**
METHOD FOR PRODUCING A COMPONENT BY WAY OF STEREOLITHOGRAPHY
PROCÉDÉ DE FABRICATION D'UN COMPOSANT PAR STÉRÉOLITHOGRAPHIE

(30) Priorität: 06.08.2018 DE 102018119027
(43) Veröffentlichungstag der Anmeldung: 16.06.2021
(73) Patentinhaber: Kulzer GmbH, 63450 Hanau (DE)
(72) Erfinder: DIEZ, Lars Hendrik, 63456 Hanau (DE); ZARY, Abdullah, 63454 Hanau (DE); RITZEL, Roger, 63599 Biebergemünd (DE)
(74) Vertreter: Schultheiss & Sterzel Patentanwälte PartG mbB
(86) Internationale Anmeldenummer: PCT/EP2019/065889
(87) Internationale Veröffentlichungsnummer: WO 2020/030338

(56) Entgegenhaltungen:
- EP-B1- 3 713 741
- WO-A1-2018/118832
- WO-A2-2009/140449
- CN-U- 203 831 648

## Beschreibung

Die Erfindung betrifft ein Verfahren zur Herstellung eines Bauteils mit Stereolithographie.

Die Erfindung betrifft auch ein 3D-Drucksystem zur Herstellung eines Bauteils mittels Stereolithographie, das 3D-Drucksystem aufweisend eine Druckvorrichtung zum ortsabhängigen und schichtweisen Aushärten eines flüssigen Kunststoffs und eine Steuerung.

Neben handwerklichen Techniken gewinnen digitale Fertigungsmethoden auch im Dentalbereich immer mehr an Bedeutung. Zahnersatz und andere Dentalformteile, wie zum Beispiel Kronen, Brücken und 3-dimensionale Modelle des Mundraums eines Patienten, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung.

Stereolithographie wird derzeit eingesetzt, um Prototypen oder Bauteile aus Kunststoff herzustellen. Stereolithographie ist ein technisches Prinzip des Rapid Prototyping oder des Rapid-Manufacturing, bei dem ein Werkstück durch im Raum materialisierende Punkte schichtweise aufgebaut wird. Die Fertigung eines Teils oder mehrerer Teile gleichzeitig erfolgt üblicherweise vollautomatisch aus am Computer erstellten CAD-Daten. Das Prinzip wurde bereits 1984 durch den US-Physiker Chuck Hull entwickelt und mit der Patentanmeldung US 4 575 330 A zum Patent angemeldet. Bei 3D-Druckverfahren, die auf Stereolithographie basieren, wird ein Bauteil durch Lichtpolymerisation eines flüssigen Kunststoffs erzeugt. Solche stereolithographischen 3D-Drucker sind beispielsweise aus der US 2017/291 356 A1 und der EP 3 174 693 B1 bekannt.

Die WO 2009/140449 A2 offenbart ein Verfahren zum Reinigen und/oder Härten eines mittels Rapid-Prototyping hergestellten Teils. Aus der CN203831648 U ist eine Vorrichtung zum Nachbehandeln eines durch Lichthärtung mit einem 3D-Drucker hergestellten Bauteils bekannt, bei dem ein Block mit einem Motor gedreht wird.

Es gibt Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt.

Nach dem Erzeugen der Bauteile mit Stereolithographie müssen diese von flüssigen Kunststoffresten an deren Oberfläche befreit werden. Aktuell werden die mit Stereolithographie additiv gefertigten Bauteile hierzu manuell durch Druckluft mit einer Druckluftpistole vorgereinigt. Darauffolgend werden die Bauteile in einer Endreinigung oder Nachreinigung im Ultraschallbad mit einer Reinigungsflüssigkeit wie Isopropanol gereinigt, um die Reste des nicht ausgehärteten Kunststoffs zu entfernen. Dies ist aufwendig, da die Bauteile hierfür einzeln in die Hand genommen werden müssen. Zudem ist die Oberfläche der Bauteile bei komplizierteren Geometrien nicht überall gut zu erreichen. Dies gilt insbesondere für Hohlformen, deren innere Bereiche mit dem Luftstrom nicht gut zu treffen sind und in denen sich die Reinigungsflüssigkeit sammeln kann und dort nur schlecht wieder zu entfernen ist.

Die Aufgabe der Erfindung besteht also darin, die Nachteile des Stands der Technik zu überwinden. Insbesondere soll ein Verfahren bereitgestellt werden, mit dem Bauteile mit Stereolithographie in Serie bei geringem Arbeitsaufwand gefertigt werden können. Das Verfahren soll möglichst vollständig automatisiert ablaufen können. Dabei sollen qualitativ hochwertige und saubere Bauteile als Endprodukt vorliegen. Insbesondere soll die Reinigung der Bauteile vereinfacht werden und automatisiert erfolgen können.

Die Aufgaben der Erfindung werden gelöst durch ein Verfahren zur Herstellung eines Bauteils mit Stereolithographie unter Anwendung eines Zentrifugiermoduls, das Verfahren aufweisend die Schritte:
A) Erzeugen eines Bauteils nach Maßgabe eines virtuellen 3D-Modells des Bauteils durch Aushärten eines flüssigen Kunststoffs mittels Stereolithographie auf einem Träger, wobei das Bauteil derart auf dem Träger erzeugt wird, dass das Bauteil so auf dem Träger positioniert wird, dass die Drehachse oder wenigstens eine der Drehachsen durch den Bereich des Schwerpunkts des Bauteils verläuft, insbesondere durch den Schwerpunkt des Bauteils verläuft, oder die Drehachse oder wenigstens eine der Drehachsen durch den Bereich des Schwerpunkts des Systems aus dem Bauteil, dem Träger und aller sich mit dem Bauteil drehenden Teile des Zentrifugiermoduls verläuft, insbesondere durch den Schwerpunkt des Systems verläuft, und
B) Befestigen des Trägers mit dem Bauteil darauf zum Reinigen des Bauteils in einem Zentrifugiermodul oder der Träger mit dem Bauteil darauf ist zum Reinigen des Bauteils in dem Zentrifugiermodul befestigt, und

Reinigen des Bauteils durch zumindest eine Drehbewegung des Bauteils um die Drehachse oder um die mehrere Drehachsen, wobei Reste des flüssigen Kunststoffs von der Oberfläche des Bauteils durch eine Zentrifugalkraft aufgrund der Drehbewegung entfernt werden.

Dass Reste des flüssigen Kunststoffs von der Oberfläche des Bauteils durch die Zentrifugalkraft aufgrund der zumindest einen Drehbewegung entfernt werden bedeutet im Rahmen der vorliegenden Erfindung nicht, dass nach dem Reinigen des Bauteils keine Reste des flüssigen Kunststoffs mehr an der Oberfläche des Bauteils zurückbleiben. Es müssen also nicht alle Reste des flüssigen Kunststoffs von der Oberfläche des Bauteils entfernt werden. Mit Hilfe einer Nachreinigung können verbliebene Reste noch entfernt werden. Auch in diesem Fall ergibt sich jedoch eine erhebliche Vereinfachung der Nachreinigung und ein geringerer Verbrauch der Reinigungsflüssigkeit. Das Verfahren ist dann immer noch ressourcenschonender als die Verfahren nach dem Stand der Technik, zumal der abzentrifugierte flüssige Kunststoff rückgeführt und (wenn notwendig nach einer Filterung beziehungsweise Reinigung) erneut zum Herstellen neuer Bauteile verwendet werden kann.

Als Drehbewegung kommt sowohl eine gleichmäßige Drehung in Frage, bei der eine mehrfache Drehung um dieselbe Drehachse in gleichem Drehsinn erfolgt, als auch eine oszillierende Drehung, bei der die Winkelgeschwindigkeit oszillierend in beide Drehrichtungen erfolgt und keine volle Umdrehung von 360° erfolgen muss. Ebenso kann auch eine Drehung um mehrere Drehachsen gleichzeitig oder nacheinander erfolgen.

Bevorzugt kann vorgesehen sein, dass das Erzeugen des Bauteils in Schritt A) schichtweise erfolgt. Hierdurch können bekannte Stereolithographieverfahren zum Erzeugen des Bauteils angewendet werden.

Auch kann vorgesehen sein, dass das Bauteil in Schritt A) in einem Bad befüllt mit dem flüssigen Kunststoff erzeugt wird. Der flüssige Kunststoff kann so bei dem Reinigen in Schritt B) wieder in das Bad rückgeführt beziehungsweise zurückgeleitet werden.

Es kann bei erfindungsgemäßen Verfahren auch vorgesehen sein, dass zumindest 50% der an der Oberfläche des Bauteils vorhandenen Reste des flüssigen Kunststoffs durch die Zentrifugalkraft entfernt werden, bevorzugt zumindest 85% der an der Oberfläche des Bauteils vorhandenen Reste des flüssigen Kunststoffs durch die Zentrifugalkraft entfernt werden, besonders bevorzugt zumindest 95% der an der Oberfläche des Bauteils vorhandenen Reste des flüssigen Kunststoffs durch die Zentrifugalkraft entfernt werden.

Hiermit wird klargestellt, dass eine nennenswerte Menge des flüssigen Kunststoffs von der Oberfläche des Bauteils entfernt wird, aber nicht die gesamte Menge des an den Oberflächen des Bauteils haftenden Kunststoffs entfernt werden muss. Die Reinigung ist dadurch zumindest so stark, dass eine Nachreinigung vereinfacht wird.

Ferner ist vorgesehen, dass in Schritt A) das Bauteil auf einem Träger erzeugt wird.

Der Träger kann als Bauplattform zur Herstellung des Bauteils mit dem Stereolithographieverfahren verwendet werden und gleichzeitig zur Reinigung des Bauteils verwendet werden, ohne dass hierzu das Bauteil von dem Träger getrennt werden müsste.

Es ist vorgesehen, dass der Träger mit dem Bauteil darauf zum Reinigen des Bauteils in Schritt B) in einem Zentrifugiermodul befestigt wird oder befestigt ist, wobei vorzugsweise die Drehachse durch die Position des Trägers im Zentrifugiermodul festgelegt ist oder die Drehachsen durch die Position des Trägers im Zentrifugiermodul festgelegt sind.

Durch die Verwendung eines Trägers kann das Bauteil auf einfache Weise von einer Druckvorrichtung in das Zentrifugiermodul verbracht werden, ohne dass die Gefahr einer Beschädigung des Bauteils besteht. Alternativ kann die Druckvorrichtung und das Zentrifugiermodul auch einteilig ausgeführt sein.

Des Weiteren ist vorgesehen, dass in Schritt A) das Bauteil derart auf dem Träger erzeugt wird, dass das Bauteil so auf dem Träger positioniert wird, dass die Drehachse oder wenigstens eine der Drehachsen durch den Bereich des Schwerpunkts des Bauteils verläuft, insbesondere durch den Schwerpunkt des Bauteils verläuft, oder die Drehachse oder wenigstens eine der Drehachsen durch den Bereich des Schwerpunkts des Systems aus dem Bauteil, dem Träger und aller sich mit dem Bauteil drehenden Teile des Zentrifugiermoduls verläuft, insbesondere durch den Schwerpunkt des Systems verläuft.

Hiermit soll eine die Drehbewegung störende Unwucht bei der zumindest einen Drehbewegung vermieden werden, was zum einen die Lagerung des Bauteils oder des Systems Bauteil, Träger und aller sich drehenden Teile des Zentrifugiermoduls bei der Drehbewegung vereinfacht und zum anderen eine Beschädigung des möglicherweise noch nicht voll ausgehärteten Bauteils durch die aufgrund der Unwucht auftretenden Kräfte verhindern kann. Mit der vorliegenden Erfindung wurde überraschend gefunden, dass bereits bei der Erzeugung des Bauteils durch eine geeignete Positionierung oder Positionierung und Orientierung des Bauteils auf einem Träger eine einfache und kostengünstige, gleichzeitig aber auch effiziente Reinigung durch zumindest eine Drehbewegung ermöglicht werden kann.

Es ist dabei für die Verwirklichung der vorliegenden Erfindung ausreichend, wenn die Drehachse oder wenigstens eine der Drehachsen derart dicht an dem Schwerpunkt vorbeiläuft, dass die durch die bei der jeweiligen Drehbewegung auftretenden Kräfte durch die daraus resultierende Unwucht so gering sind, dass kein konstruktiver Aufwand bei der Lagerung des Trägers betrieben werden muss, der die Vorrichtung hierzu (das Zentrifugiermodul) maßgeblich verteuert. Zusätzlich sollen die bei der jeweiligen Drehbewegung auftretenden Kräfte durch die daraus resultierende Unwucht auch so gering sein, dass der eine Verformung oder Zerstörung des noch nicht voll ausgehärteten Bauteils verhindert wird. Bevorzugt läuft die Drehachse oder wenigstens eine der Drehachsen genau oder so genau wie möglich durch den Schwerpunkt des Bauteils, um die Unwucht möglichst gering zu halten.

Es wird mit der Erfindung auch vorgeschlagen, dass bei dem Verfahren ein Schritt AA) erfolgt: AA) Festlegen der Position oder der Position und der Orientierung des zu erzeugenden Bauteils auf dem Träger vor Schritt A), wobei das Bauteil derart auf dem Träger positioniert wird, dass die zumindest eine Drehachse des Bauteils durch einen Bereich um einen Schwerpunkt des Bauteils verläuft, insbesondere genau durch den Schwerpunkt des Bauteils verläuft, oder die zumindest eine Drehachse durch den Bereich um einen Schwerpunkt des Systems aus dem Bauteil, dem Träger und aller sich mit dem Bauteil drehenden Teile des Zentrifugiermoduls verläuft, insbesondere genau durch den Schwerpunkt des Systems verläuft, und gekennzeichnet durch Erzeugen des Bauteils an der so bestimmten Position oder der so bestimmten Position mit der so bestimmten Orientierung auf dem Träger in Schritt A).

Auch hiermit soll eine die Drehbewegung störende Unwucht bei der zumindest einen Drehbewegung vermieden werden, was zum einen die Lagerung des Bauteils bei der Drehbewegung vereinfacht und zum anderen eine Beschädigung des möglicherweise noch nicht voll ausgehärteten Bauteils durch die aufgrund der Unwucht auftretenden Kräfte verhindern kann. Zudem wird so genutzt, dass das virtuelle 3D-Modell ohnehin vorhanden ist und dies vorteilhaft genutzt werden kann. Dabei wird genutzt, dass sich die Lage des Schwerpunkts am virtuellen 3D-Modell leicht berechnen lässt und dadurch die Position und gegebenenfalls die Orientierung auf einfache Weise berechnen lässt.

Dabei kann vorgesehen sein, dass in Schritt AA) der Schwerpunkt des Bauteils oder des Systems anhand des virtuellen 3D-Modells bestimmt wird und damit die Position oder die Position und die Orientierung des zu erzeugenden Bauteils auf dem Träger bestimmt wird.

Hiermit werden die Vorteile einer rechnergestützten Herstellung des Bauteils auch bei dessen Reinigung genutzt.

Bevorzugt kann auch vorgesehen sein, dass die Aushärtung des flüssigen Kunststoffs in Schritt A) durch Licht, UV-Licht oder Laserlicht erfolgt und als flüssiger Kunststoff ein lichtaushärtender Kunststoff verwendet wird, insbesondere ein Acrylharz, Epoxidharz oder Vinylesterharz.

Diese Methoden zur Aushärtung sind besonders sinnvoll zusammen mit dem Reinigungsschritt einzusetzen, da dort auch eine größere Menge des flüssigen Kunststoffs, der zum Erzeugen des Bauteils verwendet wird, an der Oberfläche des Bauteils haften bleiben und/oder eingeschlossen werden kann, aber gleichzeitig dort auch relativ dünnflüssig bleibt, so dass eine gute Reinigungswirkung durch die Zentrifugalkraft erzielt werden kann.

Des Weiteren kann vorgesehen sein, dass mit dem Verfahren ein Dentalmodell oder ein Modell eines Mundraums zur Aufstellung von Zahnersatz als das Bauteil hergestellt wird oder ein Modell eines Zahnersatzes oder Zahnersatzteils, insbesondere eine Prothesenbasis, als das Bauteil hergestellt wird und in Schritt A) erzeugt wird.

Das erfindungsgemäße Verfahren eignet sich besonders für eine automatisierte Herstellung von Modellen im Dentalbereich und Dentalprodukten, da der Reinigungsschritt vereinfacht ist und gut vollständig automatisiert durchführbar ist.

Ferner kann erfindungsgemäß der folgende Schritt vorgesehen sein: C) Nachreinigen des Bauteils nach Schritt B) mit einer Reinigungsflüssigkeit, insbesondere mit Isopropanol, wobei Schritt C) nach Schritt B) erfolgt.

Durch die Nachreinigung können auch nach der Reinigung noch an dem Bauteil anhaftende Reste des Kunststoffs und andere Verunreinigungen entfernt werden. Die Nachreinigung ist wesentlich weniger aufwendig durch die vorgelagerte Reinigung im Vergleich dazu, wenn nur eine normale Reinigung nach Art der Nachreinigung durchgeführt wird.

Ferner kann ein Entfernen von Resten der Reinigungsflüssigkeit von der Oberfläche des Bauteils durch eine Zentrifugalkraft aufgrund einer Drehbewegung in Schritt C) vorgesehen sein.

Da das Bauteil ohnehin für das Reinigen in Schritt B) drehbar gelagert und gegebenenfalls der Schwerpunkt geeignet ausgerichtet ist, kann eine Drehbewegung auch zum Entfernen von Rückständen der Reinigungsflüssigkeit verwendet werden.

Des Weiteren kann ein Schritt D) Nachhärten des Bauteils nach Schritt B) vorgesehen sein, wobei das Bauteil beim Nachhärten um die Drehachse gedreht wird oder um wenigstens eine der Drehachsen gedreht wird, wobei bevorzugt das Nachhärten durch Nachbelichten oder eine Wärmebehandlung oder durch Nachbelichten und eine Wärmebehandlung erfolgt.

Auch hierbei wird die ohnehin verfügbare Möglichkeit, das Bauteil drehen zu können (insbesondere ohne starke Unwucht drehen zu können), dazu genutzt, ein Nachhärten des Bauteils zu vereinfachen, indem das Bauteil beim Nachhärten gedreht wird. Dadurch kann die Vorrichtung zum Nachhärten einfacher und kostengünstiger aufgebaut werden, beziehungsweise ein gleichmäßigeres Nachhärten des Bauteils erreicht werden.

Gemäß einer Weiterbildung des erfindungsgemäßen Verfahrens kann vorgesehen sein, dass in Schritt B) die Drehbewegung in einem Gehäuse erfolgt, wobei die durch die Zentrifugalkraft entfernten Reste des flüssigen Kunststoffs von dem Gehäuse aufgefangen werden.

Hierdurch können die durch die Zentrifugalkraft vom Bauteil entfernten Reste des flüssigen Kunststoffs wiederverwendet oder zumindest gesammelt und zur Wiederverwendung wiederaufbereitet werden.

Es kann auch vorgesehen sein, dass die Drehbewegung in Schritt B) mit einer Drehgeschwindigkeit zwischen 200 Umdrehungen pro Minute und 1000 Umdrehungen pro Minute erfolgt, bevorzugt mit einer Drehgeschwindigkeit zwischen 300 Umdrehungen pro Minute und 800 Umdrehungen pro Minute erfolgt.

Bei diesen Drehgeschwindigkeiten wird eine gute Reinigungswirkung erzielt, ohne dass das nach dem Erzeugen des Bauteils noch nicht vollständig ausgehärtete Bauteil verformt wird. Diese Drehgeschwindigkeiten haben sich insbesondere für Dentalformteile als geeignet herausgestellt, die üblicherweise Abmessungen zwischen 5 mm und 150 mm aufweisen.

Es kann auch vorgesehen sein, dass als Bauteil ein Hohlmodell oder eine Hohlform hergestellt wird.

Die Herstellung von Hohlmodellen und Hohlformen mit dem erfindungsgemäßen Verfahren ist besonders vorteilhaft, da die innen liegenden Oberflächen von Hohlmodellen und Hohlformen nicht gut auf andere Weise zu reinigen sind, da sie von einem Luftstrom schwer erreicht werden können oder sich die verwendete Reinigungsflüssigkeit in den Hohlformen oder Hohlmodellen festsetzt und nur schwer wieder entfernt werden kann.

Des Weiteren kann vorgesehen sein, dass in Schritt B) das Bauteil mit einem Luftstrom angeblasen wird, insbesondere mit einem Druckluftstrom.

Mit dem Luftstrom kann eine zusätzliche Reinigungswirkung erzielt werden. Zudem können so auch die dicht bei der Drehachse oder den Drehachsen gelegenen Bereiche der Oberfläche des Bauteils von dem Luftstrom erreicht werden und der Luftstrom kann die an diesen Teilen anheftenden Reste des flüssigen Kunststoffs radial nach außen treiben, so dass sie dort von der Zentrifugalkraft getrieben entfernt werden.

Es kann auch vorgesehen sein, dass die Winkelgeschwindigkeit der zumindest Drehbewegung und/oder eine Winkelbeschleunigung zum Erreichen der Winkelgeschwindigkeit der zumindest Drehbewegung in Abhängigkeit von der Form des Bauteils gesteuert wird, so dass eine Zerstörung oder eine Verformung des Bauteils bei der zumindest einen Drehbewegung vermieden wird.

Hierdurch kann eine möglichst starke Drehung zur schnellen und effizienten Reinigung des Bauteils verwendet werden, ohne dass eine Zerstörung oder Verformung des Bauteils zu befürchten ist. Dabei kann erfindungsgemäße bevorzugt die Konsistenz des Bauteils berücksichtigt werden.

Die der vorliegenden Erfindung zugrundeliegenden Aufgaben werden auch gelöst durch ein 3D-Drucksystem zur Herstellung eines Bauteils mittels Stereolithographie, das 3D-Drucksystem aufweisend eine Druckvorrichtung zum ortsabhängigen und schichtweisen Aushärten eines flüssigen Kunststoffs, eine Steuerung, insbesondere einen Computer mit einem Computerprogramm, wobei die Steuerung zur Steuerung der Druckvorrichtung nach Schritt A) nach dem erfindungsgemäßen Verfahren gemäß einem virtuellen 3D-Modell eines zu erzeugenden Bauteils geeignet und vorgesehen ist, und ein Zentrifugiermodul, mit dem das mit der Druckvorrichtung erzeugte Bauteil derart mit einer Drehbewegung drehbar ist, dass Reste des flüssigen Kunststoffs von der Oberfläche des Bauteils durch eine Zentrifugalkraft aufgrund der Drehbewegung entfernbar sind, ein Schwerpunktberechnungsmodul zur Bestimmung der Lage des Schwerpunkts des virtuellen 3D-Modells des Bauteils oder eines virtuellen 3D-Modells eines Systems aus dem Bauteil, dem Träger und aller sich mit dem Bauteil drehenden Teile des Zentrifugiermoduls, und ein Positionierungsmodul zur Bestimmung der Position oder der Position und der Orientierung des zu erzeugenden Bauteils in der Druckvorrichtung.

Die Druckvorrichtung weist vorzugsweise eine Lichtquelle und ein Bad auf, wobei das Bad mit einem flüssigen und mit dem Licht der Lichtquelle aushärtbaren Kunststoff gefüllt ist oder befüllbar ist.

Das Zentrifugiermodul kann als separates Teil zur Druckvorrichtung vorgesehen sein oder gemeinsam mit der Druckvorrichtung aufgebaut werden. Für letzteres kann beispielsweise vorgesehen sein, dass das erzeugte Bauteil aus einem Bad des flüssigen Kunststoffs herausgehoben wird und dort mit dem Zentrifugiermodul in eine Drehbewegung versetzt wird. Das Zentrifugiermodul kann einen Elektromotor zum Erzeugen der Drehbewegung und eine Halterung zum Befestigen des Bauteils oder eines Trägers aufweisen, wobei das Bauteil auf dem Träger erzeugt wurde. Theoretisch kann das Zentrifugiermodul auch während der Erzeugung des Bauteils mit der Druckvorrichtung verwendet werden.

Das 3D-Drucksystem weist ein Schwerpunktberechnungsmodul zur Bestimmung der Lage des Schwerpunkts des virtuellen 3D-Modells des Bauteils oder eines virtuellen 3D-Modells eines Systems aus dem Bauteil, dem Träger und aller sich mit dem Bauteil drehenden Teile des Zentrifugiermoduls auf, und ein Positionierungsmodul zur Bestimmung der Position oder der Position und der Orientierung des zu erzeugenden Bauteils in der Druckvorrichtung.

Hierdurch kann das Bauteil in dem 3D-Drucksystem gleich in der Position und gegebenenfalls in der Orientierung erzeugt werden, so dass eine Drehbewegung des Bauteils bei einer Drehung im Zentrifugiermodul möglichst einfach umsetzbar ist. Dabei kann eine aufwendige Lagerung des Bauteils im Zentrifugiermodul zur Aufnahme von Unwuchten vermieden werden, indem das Bauteil derart positioniert wird, dass die Drehachse oder die Drehachsen durch den mit dem Schwerpunktberechnungsmodul berechneten Schwerpunkt verlaufen.

Unter einer Orientierung ist vorliegend eine Lage des Bauteils im Raum relativ zur Druckvorrichtung oder des Systems aus Bauteil, Träger und gegebenenfalls sich mit dem Bauteil drehende Teile des Zentrifugiermoduls relativ zu den sich nicht drehenden Teilen des Zentrifugiermoduls zu verstehen, die durch eine Drehung des Bauteils gegen die Druckvorrichtung oder des Systems gegen die nicht drehenden Teile des Zentrifugiermoduls erreicht werden kann. Eine Änderung der Orientierung des Bauteils wird also durch eine Drehung des Bauteils gegen die Druckvorrichtung erreicht, beziehungsweise eine Änderung der Orientierung des Systems wird also durch eine Drehung des Systems gegen das Zentrifugiermodul erreicht. Dagegen wird eine Änderung der Position des Bauteils durch eine translatorische Bewegung des Bauteils gegen die Druckvorrichtung erreicht und eine Änderung der Position des Systems entsprechend durch eine translatorische Bewegung des Systems gegen das Zentrifugiermodul.

Dabei kann vorgesehen sein, dass das Positionierungsmodul mit dem Schwerpunktberechnungsmodul verbunden ist und auf den vom Schwerpunktberechnungsmodul bestimmten Schwerpunkt Zugriff hat, und dazu programmiert ist, dass die Position oder die Position und die Orientierung des zu erzeugenden Bauteils in der Druckvorrichtung in Abhängigkeit von dem durch das Schwerpunktberechnungsmodul berechneten Schwerpunkts zu bestimmen.

Hiermit wird sichergestellt, dass die spätere Drehachse oder Drehachsen durch den Schwerpunkt des Bauteils oder des Systems aus Bauteil, Träger und gegebenenfalls sich mit dem Bauteil drehender Teile des Zentrifugiermoduls verlaufen und so keine Unwucht bei der Drehbewegung im Zentrifugiermodul entsteht.

Ferner kann vorgesehen sein, dass die Druckvorrichtung eine Halterung zur Befestigung eines Trägers aufweist, wobei das Bauteil auf dem Träger erzeugbar ist, wobei vorzugsweise die Druckvorrichtung wenigstens einen Träger aufweist.

Hierdurch lässt sich das Bauteil auf dem Träger ohne mechanische Belastung des erzeugten Bauteils in das Zentrifugiermodul übertragen.

Es kann auch vorgesehen sein, dass das 3D-Drucksystem zum Umsetzen eines erfindungsgemäßen Verfahrens ausgebildet ist.

Hierdurch hat das 3D-Drucksystem die Vorteile des erfindungsgemäßen Verfahrens.

Schließlich kann auch ein Nachhärtemodul zum Nachhärten des Bauteils mittels Licht oder Temperatur oder mittels Licht und Temperatur vorgesehen sein, wobei das Bauteil beim Nachhärten in dem Nachhärtemodul drehbar ist und wobei vorzugsweise das Nachhärtemodul einteilig mit dem Zentrifugiermodul ausgeführt ist.

Hiermit wird ein vollautomatisches 3D-Drucksystem bereitgestellt, bei dem das Bauteil fertig und unmittelbar verwendbar ist. Gleichzeitig kann die Möglichkeit zur Drehung des Bauteils zur Vereinfachung des Aufbaus des Nachhärtemoduls genutzt werden und es ist eine Verbesserung der Homogenität der Nachhärtung erzielbar.

Der Erfindung liegt die überraschende Erkenntnis zugrunde, dass es durch die zumindest eine Drehbewegung des Bauteils gelingt, die dabei entstehenden Zentrifugalkräfte dazu zu nutzen, zumindest einen Teil des Rests des nach der Erzeugung des Bauteils an dem Bauteil anhaftenden Kunststoffs und gegebenenfalls andere Verunreinigungen von dem Bauteil zumindest so weitgehend zu entfernen, dass eine einfache und kurze Nachreinigung mit Isopropanol oder einer anderen Reinigungsflüssigkeit dazu ausreicht, um das Bauteil zu säubern. Danach oder mit einem nachfolgenden Nachhärtungsschritt ist das Bauteil dann für die weitere Verwendung einsatzbereit. Die Reinigung sollte dabei vor der Nachhärtung erfolgen, damit nicht anhaftende Reste des flüssigen Kunststoffs, aus dem das Bauteil gefertigt wurde, mit aushärten und damit die gewünschte Form des Bauteils verfälschen beziehungsweise beeinträchtigen. Mit der Erfindung wurde auch überraschend gefunden, dass bei moderaten Umdrehungszahlen, die Zentrifugalkräfte zwar zum Entfernen der Reste des flüssigen Kunststoffs ausreichen, aber dennoch keine Verformungen des noch nicht vollständig ausgehärteten Bauteils zu befürchten sind. Die maximal verwendbare Drehgeschwindigkeit hängt dabei von der radialen Größe des Bauteils bezüglich der verwendeten Drehachse(n), dem verwendeten flüssigen Kunststoff und dem eingesetzten Stereolithographieverfahren hinsichtlich der Wellenlänge und Leistung der Lichtquelle, aber auch der gewählten Rasterdichte und dem Fokus der Lichtquelle ab. In einem gewissen Umfang spielt auch die genaue Geometrie des erzeugten Bauteils eine Rolle. So können beispielsweise dünne Stege, die radial außenliegende massereiche Bereiche mit der Drehachse verbinden, eher brechen als massive Bauteile.

Die vorliegende Erfindung ermöglicht es, durch die Nutzung der Zentrifugalkraft die Oberfläche sowie Hohlräume von additiv gefertigten Bauteilen von unausgehärteten Kunststoffresten beziehungsweise Kunstharzresten zu befreien. Hierbei ist es möglich, die Bauplattform oder einen Teil der Bauplattform inklusive gedruckten Teile direkt in der Reinigungsanlage zu platzieren. Der Prozess ist schneller und effizienter als herkömmliche Reinigungsverfahren beziehungsweise Druckverfahren. Zudem ist eine bessere Reproduzierbarkeit realisierbar.

Die Erfindung ersetzt hauptsächlich die manuelle Vorreinigung, welche jedoch als besonders benutzerunfreundlich bezeichnet werden kann. Die Nachreinigung kann, wenn sie nicht völlig ersetzt werden kann, zumindest deutlich entlastet werden. Insbesondere verschmutzt die Reinigungsflüssigkeit bei der Nachreinigung wesentlich langsamer als bei herkömmlicher Endreinigung mit der Reinigungsflüssigkeit, da durch die zumindest eine Drehbewegung ein Großteil des flüssigen Kunststoffs entfernt werden kann.

Der Anwender arbeitet weniger mit dem flüssigen Kunstharz beziehungsweise dem flüssigen Kunststoff und kommt dadurch weniger mit diesen Substanzen in körperlichen Kontakt. Dadurch wird weniger persönliche Schutzausrüstung benötigt. Auch der Lärm, dem der Anwender einer Druckluftpistole ausgesetzt ist, und das Einatmen von Dämpfen des flüssigen Kunststoffs werden durch das Verfahren vermieden. Eine Schutzbrille wird zum Beispiel nicht mehr zwingend benötigt. Des Weiteren ist eine geruchslosere Reinigung auch ohne Abzug möglich, da der flüssige Kunststoff beziehungsweise das flüssige Kunstharz nicht mehr so stark zerstäubt wird und die Reinigung in einem geschlossenen Gehäuse durchgeführt werden kann. Auch die Prozesssicherheit wird erhöht, da manuelle Fehler beim manuellen Reinigen des Bauteils mit Druckluft ausgeschlossen werden können.

Das hier beschriebene 3D-Drucksystem umfasst eine automatisierte Reinigungsanlage und eignet sich auch für eine vollautomatisierte Prozesskette zum Waschen und gegebenenfalls auch zum Nachhärten des Bauteils.

Im Folgenden werden weitere Ausführungsbeispiele der Erfindung anhand von fünf schematisch dargestellten Figuren erläutert, ohne jedoch dabei die Erfindung zu beschränken. Dabei zeigt:
Figur 1: eine schematische Ansicht eines erfindungsgemäßen 3D-Drucksystems mit einem Zentrifugiermodul zur Umsetzung eines erfindungsgemäßen Verfahrens;
Figur 2: eine schematische Ansicht eines zweiten alternativen Zentrifugiermoduls zur Umsetzung eines erfindungsgemäßen Verfahrens;
Figur 3: eine schematische Ansicht eines dritten alternativen Zentrifugiermoduls zur Umsetzung eines erfindungsgemäßen Verfahrens;
Figur 4: eine schematische Ansicht eines vierten alternativen Zentrifugiermoduls zur Umsetzung eines erfindungsgemäßen Verfahrens; und
Figur 5: den Ablauf eines erfindungsgemäßen Verfahrens zum Herstellen eines Bauteils mit Stereolithographie.

In den Figuren werden teilweise auch für unterschiedliche Ausführungen der Übersichtlichkeit wegen die gleichen Bezugszeichen auch für unterschiedliche aber gleichartige Teile verwendet, wie beispielsweise für die Gebläserohre in unterschiedlicher Ausführung, die in der gesamten folgenden Figurenbeschreibung und in allen Figuren mit dem Bezugszeichen 26 gekennzeichnet sind.

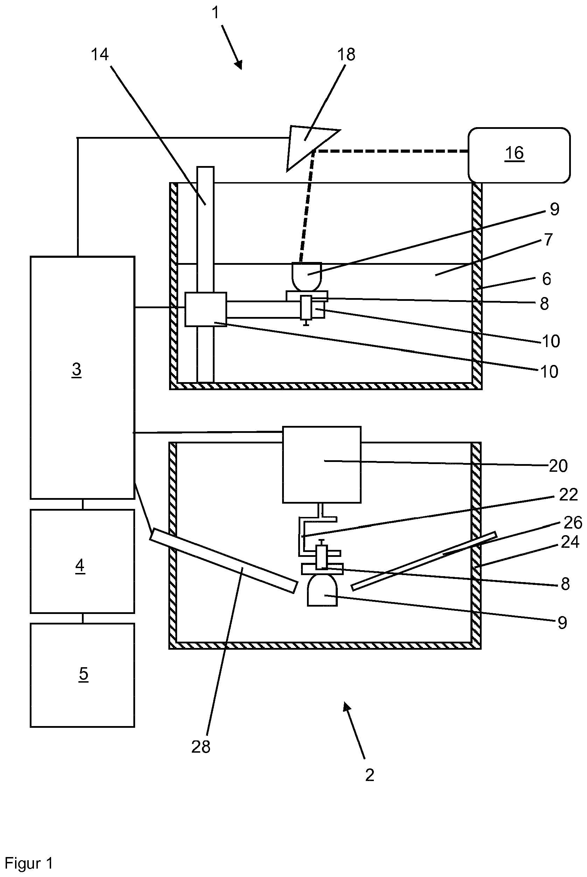

Figur 1 zeigt eine schematische Ansicht eines erfindungsgemäßen 3D-Drucksystems zur Umsetzung eines erfindungsgemäßen Verfahrens und zur Herstellung eines Bauteils 9. Das Drucksystem umfasst die eigentliche stereolithographische Druckvorrichtung 1 und ein Zentrifugiermodul 2. Eine Steuerung 3 ist mit der Druckvorrichtung 1 und dem Zentrifugiermodul 2 verbunden und dazu in der Lage die Druckvorrichtung 1 und das Zentrifugiermodul 2 zu steuern. Als Steuerung 3 kann ein geeignet programmierter Computer verwendet werden. Die Steuerung 3 übernimmt die Steuerung des CAM und wird auch zur Berechnung des CAD verwendet. Die Steuerung 3 hat ein Positionierungsmodul 4 zur Berechnung der Position oder der Position und der Orientierung des zu erzeugenden Bauteils 9 und ein Schwerpunktberechnungsmodul 5 zur Berechnung der Lage des Schwerpunkts in dem zu erzeugenden Bauteil 9.

Die Druckvorrichtung 1 hat ein Bad 6 für einen lichtpolymerisierbaren flüssigen Kunststoff 7, aus dem das Bauteil 9 hergestellt wird. Als flüssiger Kunststoff 7 wird ein lichtaushärtendes Kunstharz, wie beispielsweise ein Acrylharz, Epoxidharz oder Vinylesterharz verwendet. Das Bauteil 9 wird auf einem Träger 8 erzeugt, der lösbar mit einer beweglichen Plattform 10 der Druckvorrichtung 1 verbunden ist. Das Bad 6 ist gut mit dem flüssigen Kunststoff 7 gefüllt, so dass das zu erzeugende Bauteil 9 mit dem Träger 8 vollständig in dem flüssigen Kunststoff 7 eintauchen kann.

Der Träger 8 ist in einer eindeutigen Position und Orientierung mit der beweglichen Plattform 10 verbunden beziehungsweise verbindbar. Die Lage und die Orientierung des Trägers 8 sind in der Steuerung 3 und in dem Positioniermodul 4 als Datensatz hinterlegt und wird beim Aufbau des Bauteils 9 und bei der Berechnung der Position oder der Position und der Lage des Bauteils 9 von dem Positioniermodul 4 berücksichtigt.

Die Plattform 10 ist innerhalb des Bads 6 zumindest in der Höhe verstellbar (in Figur 1 von oben nach unten), kann aber auch in der Ebene senkrecht dazu verstellbar sein. Dazu ist die Plattform 10 an einem senkrecht im Bad 6 stehenden Pfosten 14 in Längsrichtung verschiebbar angeordnet. Das Verstellen der Plattform 10 wird von der Steuerung 3 bei dem Erzeugen des Bauteils 9 gesteuert.

Die Druckvorrichtung 1 umfasst auch einen Laser 16, dessen Wellenlänge zum Aushärten des flüssigen Kunststoffs 7 geeignet ist. Der von dem Laser 16 erzeugte Laserstrahl (in Figur 1 als dicke gestrichelte Linie dargestellt) wird von einem drehbar beweglich gelagerten und steuerbaren Spiegel 18 in das Bad 6 gelenkt. Die Neigung des beweglichen Spiegels 18 kann beispielsweise über Schrittmotoren (nicht gezeigt) in zwei senkrecht zueinander stehenden Achsen eingestellt werden. Die Steuerung 3 stellt die Neigung des beweglichen Spiegels 18 im Raum ein, so dass der gesamte Druckvorgang mit der Steuerung 3 steuerbar ist.

Zur Herstellung des Bauteils 9 wird der Träger 8 auf der Plattform 10 befestigt. Anschließend werden mit dem Laserstrahl Schichten des flüssigen Kunststoffs 7 auf dem Träger 8 und aufeinander ausgehärtet und so das Bauteil 9 schichtweise aufgebaut. Die Steuerung des Laserstahls erfolgt dabei über die Neigung des Spiegels 18, die von der Steuerung 3 eingestellt wird. Für jede Schicht des Bauteils 9 wird der Träger 8 tiefer in dem Bad 6 beziehungsweise in dem flüssigen Kunststoff 7 versenkt, so dass die obere Schicht des Bauteils 9 immer an der Oberfläche des flüssigen Kunststoffs 7 grenzt und so mit dem Laserstrahl erreichbar ist. Die Plattform 10 und damit die Höhe des Bauteils 9 in dem flüssigen Kunststoff 7 wird dabei ebenfalls von der Steuerung 3 gesteuert.

Nachdem das Bauteil 9 in der Druckvorrichtung 1 vollständig erzeugt wurde, wird der Träger 8 mit dem Bauteil 9 darauf von der Plattform 10 entnommen und im Zentrifugiermodul 2 befestigt.

Das Zentrifugiermodul 2 hat einen Motor 20, der von der Steuerung 3 steuerbar ist. Die Achse des Motors 20 ist über eine Schnellspannaufnahme 22 mit dem Träger 8 verbunden beziehungsweise verbindbar. Der Träger 8 kann dabei derart in die Schnellspannaufnahme 22 eingespannt werden, dass die Position und die Orientierung des Trägers 8 bezüglich des Motors 20 festgelegt sind.

Der Träger 8 mit dem Bauteil 9 wird in einem Gehäuse 24 des Zentrifugiermoduls 2 bewegt. Das Gehäuse 24 fängt den von der Oberfläche des Bauteils 9 abtropfenden flüssigen Kunststoff auf. Der flüssige Kunststoff kann zurück in das Bad 6 der Druckvorrichtung 1 geleitet werden, wobei der flüssige Kunststoff hierzu zuvor gereinigt und/oder gefiltert werden kann.

Das Bauteil 9 kann zusätzlich mit einem Gebläserohr 26, dessen Spitze eine Druckluftdüse formt, einem Luftstrom ausgesetzt werden, der die Trennung von Resten des flüssigen Kunststoffs von der Oberfläche des Bauteils 9 unterstützt. Des Weiteren kann eine Lichtquelle 28 zum Nachhärten des Bauteils 9 verwendet werden.

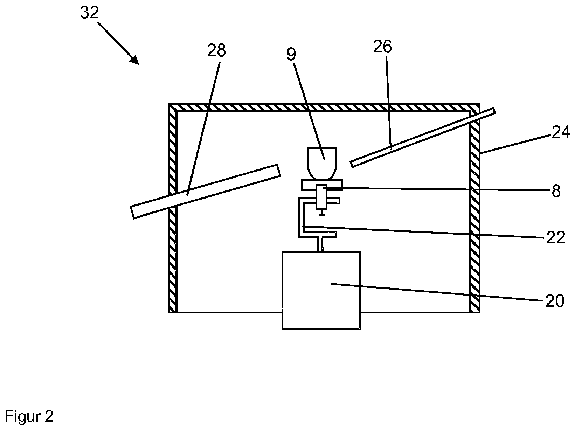

In den Figuren 2 bis 4 sind Varianten eines Zentrifugiermoduls 32, 42, 52 dargestellt, die ohne weiteres das Zentrifugiermodul 2 nach Figur 1 ersetzen können. Bei dem Zentrifugiermodul 32 nach Figur 2 ist das Gehäuse 24 nach unten offen ausgeführt. Dadurch kann der vom Bauteil 9 abtropfende flüssige Kunststoff direkt aufgefangen werden. Zudem ist die Neigung des Gebläserohrs 26 relativ zum Bauteil 6 verändert. Ansonsten gleicht das Zentrifugiermodul 32 nach Figur 2 dem Zentrifugiermodul 2 nach Figur 1.

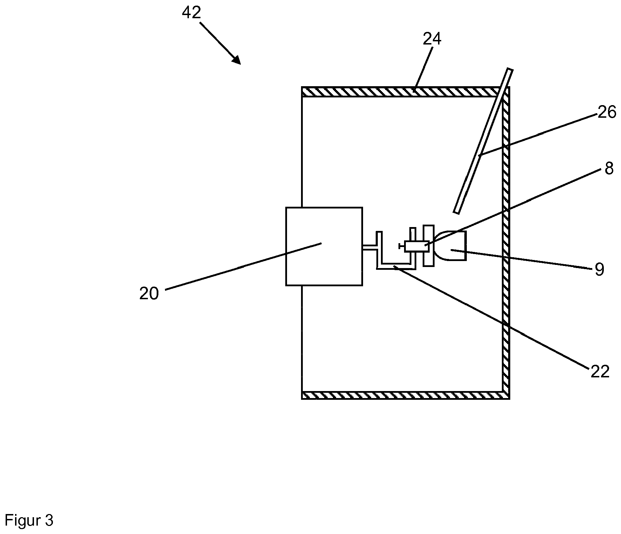

Bei dem Zentrifugiermodul 42 nach Figur 3 ist das Gehäuse 24 seitlich offen und das Bauteil 9 wird um eine horizontale Drehachse gedreht. Dadurch kann die Gravitation besser zum Abtropfen des flüssigen Kunststoffs genutzt werden, da die Zentrifugalkraft sich in einer Richtung (nach unten) zur Erdanziehungskraft addiert. Zudem ist die Neigung des Gebläserohrs 26 relativ zum Bauteil 6 verändert. Ansonsten gleicht das Zentrifugiermodul 42 nach Figur 3 dem Zentrifugiermodul 2 nach Figur 1.

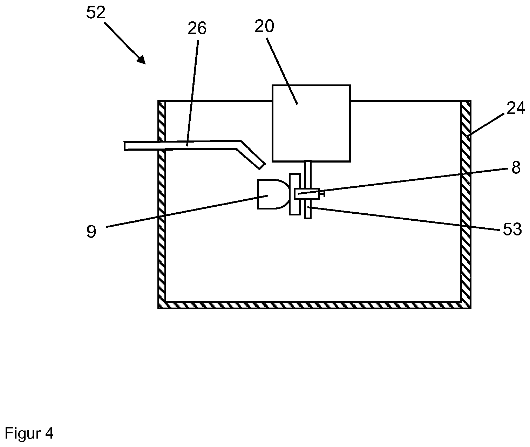

Bei dem Zentrifugiermodul 52 nach Figur 4 ist das Gehäuse 24 oben offen. Das Bauteil 9 wird um eine vertikale Drehachse 53 gedreht. Die Drehachse 53 liegt dabei nicht innerhalb des Bauteils 9. Dadurch kann eine Unwucht entstehen. Um die Unwucht zu vermeiden, kann vorgesehen sein, dass zwei einander gegenüberliegende Träger (nicht gezeigt) mit Bauteilen an der Drehachse 53 befestigt werden. Der Vorteil der Anbringung des Bauteils 9 außerhalb der Drehachse liegt darin, dass durch den größeren radialen Abstand des Bauteils zur Drehachse 53 eine größere Zentrifugalkraft bei gleicher Umdrehungsgeschwindigkeit erzielt werden kann. Das Bauteil 9 muss dann allerdings ausreichend stabil und so weitgehend ausgehärtet sein, dass die dabei auftretenden Kräfte das Bauteil 9 nicht verformen oder zerstören. Zudem weist das Gebläserohr 26 einen Knick auf. Ansonsten gleicht das Zentrifugiermodul 52 nach Figur 4 dem Zentrifugiermodul 2 nach Figur 1.

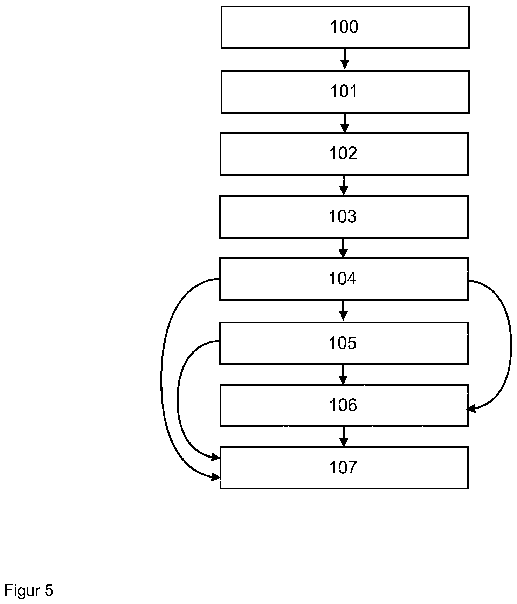

Im Folgenden wird ein beispielhaftes Verfahren anhand des mit Figuren 1 gezeigten 3D-Drucksystems mit einem der Zentrifugiermodule 2, 32, 42, 52 nach den Figuren 1 bis 4 erläutert. Der Ablauf des beispielhaften Verfahrens ist in Figur 5 dargestellt.

In einem ersten Arbeitsschritt 100 wird ein virtuelles dreidimensionales Modell des zu erzeugenden Bauteils 9, wie ein Dentalformteil oder ein Modell einer Mundraumsituation eines Patienten, mit CAD in der Steuerung 3 berechnet.

Danach wird in einem nächsten Arbeitsschritt 101 der Schwerpunkt des virtuellen dreidimensionalen Modells des Bauteils 9 mit dem Schwerpunktberechnungsmodul 5 bestimmt. Dabei wird davon ausgegangen, dass das virtuelle Modell des Bauteils 9 eine homogene Dichte aufweist. Es ist aber auch möglich, den Schwerpunkt eines Bauteils zu berechnen, das aus unterschiedlichen Materialien mit unterschiedlichen Dichten zusammengesetzt ist. Wenn dies gewünscht ist und der Träger 8 und gegebenenfalls auch weitere mitgedrehte Teile des Zentrifugiermoduls 2 mit zu einer Unwucht bei einer Drehung in dem Zentrifugiermodul 2 beitragen, kann auch gleich der Schwerpunkt des gesamten Systems Bauteil 9, Träger 8 und gegebenenfalls sich mitdrehende Teile des Zentrifugiermoduls 2 mit dem Schwerpunktberechnungsmodul 5 berechnet werden. Für die vorliegende Betrachtung reicht es allerdings aus, wenn angenommen wird, dass das Zentrifugiermodul 2 so aufgebaut ist, dass wenn der in seiner Form und Massenverteilung bekannte Träger 8 in das Zentrifugiermodul 2 in seiner ordnungsgemäßen Position eingebaut ist, alle Drehbewegungen des Zentrifugiermoduls 2 um Drehachsen erfolgen, die durch den Schwerpunkt des Systems aller sich drehenden Teile des Zentrifugiermoduls 2 und Träger 8 verlaufen. Das lässt sich beispielsweise dadurch erreichen, dass zu allen Trägheitsmomenten der sich drehenden Teile des Zentrifugiermoduls 2 und des Trägers 8 Gegengewichte derart positioniert werden, dass alle Unwuchten ausgeglichen sind. Das System ist dann ausgewuchtet. Ziel der Berechnung des Schwerpunktberechnungsmoduls 5 in Arbeitsschritt 101 und der Berechnung des Positionierungsmoduls 4 im darauffolgenden Arbeitsschritt 102 ist es also, dass durch das auf den Träger 8 aufgedruckte Bauteil 9 keine Unwucht in dem Zentrifugiermodul 2 entsteht oder dass die Geschwindigkeit der Bewegung des Bauteils 9 zur Schonung des Bauteils 9 möglichst gering gehalten wird.

In dem auf den Arbeitsschritt 101 folgenden Arbeitsschritt 102 wird mit dem Positionierungsmodul 4 das virtuelle Modell des Bauteils 9 derart auf einem Modell des Trägers 8 positioniert, dass bei einer bekannten Drehung des Trägers 8 um zumindest eine Drehachse das Bauteil 9 alleine, beziehungsweise das Modell hierzu, oder das Bauteil 9 einschließlich aller mitgedrehten Teile wie des Trägers 8 und gegebenenfalls vorhandener mitgedrehter Befestigungsteile des Zentrifugiermoduls 2, innerhalb des Zentrifugiermoduls, die zumindest eine Drehachse, bevorzugt alle Drehachsen, derart ausgerichtet sind, dass sie durch den in Arbeitsschritt 101 berechneten Schwerpunkt des Bauteils 9 laufen oder durch einen Bereich dicht bei diesem Schwerpunkt. Es reicht dabei aus, wenn die wenigstens eine Drehachse derart dicht am Schwerpunkt des Bauteils 9 vorbei durch das Bauteil 9 verläuft, dass die Lagerung des Trägers 8 in dem Zentrifugiermodul 2 nicht konstruktiv aufwendig verstärkt werden muss, um durch die Abweichung vom Schwerpunkt entstehende Unwuchten bei einer Drehbewegung aufnehmen zu können, und/oder das erzeugte Bauteil 9 keinen zu großen Kräften ausgesetzt ist, um das noch nicht voll ausgehärtete Bauteil nicht zu verformen oder zu zerstören. Für die vorliegende Betrachtung reicht es aus, wenn davon ausgegangen wird, dass weder der Träger 8 noch die sich mitdrehenden Teile des Zentrifugiermoduls 2 eine Unwucht verursachen, so dass eine Berechnung der Position oder der Position und der Orientierung des Bauteils 9 auf dem Träger 8 ausreichend ist, um Unwuchten auszuschließen oder gering zu halten. Die Position des Trägers 8, dessen Form und Massenverteilung bekannt ist, in der Druckvorrichtung 1 und in dem Zentrifugiermodul 2 ist bekannt. Insbesondere sollen die bei der jeweiligen Drehbewegung auftretenden Fliehkräfte im Bauteil 9 und die aus einer Unwucht resultierenden Kräfte auch so gering sein, dass eine Verformung oder Zerstörung des noch nicht voll ausgehärteten Bauteils 9 verhindert wird.

In einem nächsten Arbeitsschritt 103 wird das Bauteil 9 mit der Druckvorrichtung 1 schichtweise mittels Stereolithographie (als CAM-Verfahren) aus Kunststoff auf den Träger 8 gedruckt, wobei die Form des Bauteils 9 dem virtuellen 3D-Modell des Bauteils 9 gemäß der CAD-Berechnung in Arbeitsschritt 100 entspricht und die Position oder die Position und die Orientierung des Bauteils 9 auf dem Träger 8 entsprechend der Berechnung des Positionierungsmoduls 4 in Arbeitsschritt 102 erfolgt. Der eigentliche Ausdruck erfolgt mit bekannten Stereolithographie-Verfahren. Theoretisch kann der Träger 8 auch zusammen mit dem Bauteil 9 ausgedruckt werden.

Nachdem das Bauteil 9 ausgedruckt wurde, wird es mit dem Träger 8 aus der Druckvorrichtung entnommen und in dem Zentrifugiermodul 2 befestigt. In einem nun erfolgenden Arbeitsschritt 104 wird das Bauteil 9 in dem Zentrifugiermodul 2 um die zuvor zur Berechnung verwendete Drehachse gedreht oder um die zuvor zur Berechnung verwendeten Drehachsen gedreht. Dabei werden flüssige Reste des flüssigen Kunststoffs 7 von der Oberfläche des erzeugten Bauteils 9 abzentrifugiert und in dem Gehäuse 24 aufgefangen. Die Zentrifugalkraft trennt dabei die anhaftenden flüssigen Reste des flüssigen Kunststoffs 7 von der Oberfläche des Bauteils 9. Die Abtrennung kann durch einen Luftstrom unterstützt werden, der mit dem Gebläserohr 26 auf das Bauteil 9 gerichtet wird. Die Drehbewegung des Bauteils 9 kann sowohl nur in einer Richtung erfolgen, als auch alternierend, so dass die Winkelgeschwindigkeit einer Sinusfunktion folgt oder zumindest wiederholt die Richtung gewechselt wird. Die dabei auftretenden Beschleunigungskräfte und Fliehkräfte, die innerhalb des erzeugten Bauteils 9 wirken, dürfen dabei nur so stark werden, dass keine Verformung oder Zerstörung des Bauteils 9 in seinem zu diesem Zeitpunkt vorhandenen Zustand (der Aushärtung) vorkommen kann.

Bevorzugt kann vorgesehen sein, dass die Druckvorrichtung 1 und das Zentrifugiermodul 2 einteilig aufgebaut sind. Das erzeugte Bauteil 9 kann dann beispielsweise einfach durch Anheben aus dem flüssigen Kunststoff 7 herausgehoben werden und anschließend gedreht werden. Die Wandungen des Bads 6 sind dann das Gehäuse 24 und die flüssigen Kunststoffreste fallen oder fließen in das unter dem Bauteil 9 angeordnete Reservoir des flüssigen Kunststoffs 7.

Im einem nachfolgenden Arbeitsschritt 105, der optional erfolgt, wenn es notwendig ist, werden noch zurückgebliebene Reste des Kunststoffs und andere Verunreinigungen der Oberfläche des Bauteils 9 mit einer Reinigungsflüssigkeit wie Isopropanol im Rahmen einer Nachreinigung abgespült und entfernt.

In einem ebenfalls optionalen Arbeitsschritt 106 kann das Isopropanol abzentrifugiert werden.

In einem letzten Arbeitsschritt 107 wird das Bauteil 9 mit Hilfe von Licht der Lichtquelle 28 und einer leicht erhöhten Temperatur zwischen 35 °C und 90 °C nachgehärtet. Dabei wird das Bauteil 9 um zumindest eine Drehachse gedreht und befindet sich hierzu auf dem Träger 8.

Das Bauteil 9 wird von dem Träger 8 getrennt und die Verbindungfläche zum Träger 8 wenn nötig nachbearbeitet. Das Bauteil 9 ist dann fertig und kann beispielsweise zum Aufbau eines Zahnersatzes oder zum Anpassen von Zahnersatzteilen verwendet werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Druckvorrichtung
- 2: Zentrifugiermodul
- 3: Steuerung
- 4: Positionierungsmodul
- 5: Schwerpunktberechnungsmodul
- 6: Bad
- 7: Flüssiger Kunststoff
- 8: Träger
- 9: Bauteil
- 10: Plattform
- 14: Pfosten
- 16: Laser
- 18: Beweglicher Spiegel
- 20: Motor
- 22: Schnellspannaufnahme
- 24: Gehäuse
- 26: Gebläserohr
- 28: Lichtquelle
- 32: Zentrifugiermodul
- 42: Zentrifugiermodul
- 52: Zentrifugiermodul
- 53: Drehachse
- 100: Arbeitsschritt: Berechnung eines 3D-Modells des zu erzeugenden Bauteils
- 101: Arbeitsschritt: Berechnung des Schwerpunkts des 3D-Modells
- 102: Arbeitsschritt: Berechnung der Position und ggfs. der Orientierung des 3D-Modells auf dem Träger
- 103: Arbeitsschritt: Ausdrucken des Bauteils mit Stereolithographie
- 104: Arbeitsschritt: Reinigen des Bauteils mit dem Zentrifugiermodul
- 105: Arbeitsschritt: Nachreinigen des Bauteils mit Reinigungsflüssigkeit
- 106: Arbeitsschritt: Entfernen der Reinigungsflüssigkeit vom Bauteil durch Zentrifugieren
- 107: Arbeitsschritt: Nachhärten des Bauteils

## Patentansprüche

1. Verfahren zur Herstellung eines Bauteils (9) mit Stereolithographie unter Anwendung eines Zentrifugiermoduls (2), das Verfahren aufweisend die Schritte:
A) Erzeugen eines Bauteils (9) nach Maßgabe eines virtuellen 3D-Modells des Bauteils (9) durch Aushärten eines flüssigen Kunststoffs (7) mittels Stereolithographie auf einem Träger (8), wobei das Bauteil (9) derart auf dem Träger (8) erzeugt wird, dass das Bauteil (9) so auf dem Träger (8) positioniert wird, dass
eine Drehachse oder wenigstens eine von mehreren Drehachsen durch den Bereich des Schwerpunkts des Bauteils (9) verläuft, insbesondere durch den Schwerpunkt des Bauteils (9) verläuft, oder
die Drehachse oder wenigstens eine der mehreren Drehachsen durch den Bereich des Schwerpunkts des Systems aus dem Bauteil (9), dem Träger (8) und aller sich mit dem Bauteil (9) drehenden Teile des Zentrifugiermoduls (2) verläuft, insbesondere durch den Schwerpunkt des Systems verläuft, und
B) Befestigen des Trägers (8) mit dem Bauteil (9) darauf zum Reinigen des Bauteils (9) in dem Zentrifugiermodul (2) oder der Träger (8) mit dem Bauteil (9) darauf ist zum Reinigen des Bauteils (9) in dem Zentrifugiermodul (2) befestigt, und
Reinigen des Bauteils (9) durch zumindest eine Drehbewegung des Bauteils (9) um die Drehachse oder um die mehreren Drehachsen, wobei Reste des flüssigen Kunststoffs (7) von der Oberfläche des Bauteils (9) durch eine Zentrifugalkraft aufgrund der Drehbewegung entfernt werden.

2. Verfahren nach Anspruch 1, **dadurch gekennzeichnet, dass**
zumindest 50% der an der Oberfläche des Bauteils (9) vorhandenen Reste des flüssigen Kunststoffs (7) durch die Zentrifugalkraft entfernt werden, bevorzugt zumindest 85% der an der Oberfläche des Bauteils (9) vorhandenen Reste des flüssigen Kunststoffs (7) durch die Zentrifugalkraft entfernt werden, besonders bevorzugt zumindest 95% der an der Oberfläche des Bauteils (9) vorhandenen Reste des flüssigen Kunststoffs (7) durch die Zentrifugalkraft entfernt werden.

3. Verfahren nach Anspruch 1 oder 2, **dadurch gekennzeichnet, dass** die Drehachse durch die Position des Trägers (8) im Zentrifugiermodul (2) festgelegt ist oder die Drehachsen durch die Position des Trägers (8) im Zentrifugiermodul (2) festgelegt sind.

4. Verfahren nach einem der vorangehenden Ansprüche, **gekennzeichnet durch**
AA) Festlegen der Position oder der Position und der Orientierung des zu erzeugenden Bauteils (9) auf dem Träger (8) vor Schritt A), wobei das Bauteil (9) derart auf dem Träger (8) positioniert wird, dass
die zumindest eine Drehachse des Bauteils (9) durch einen Bereich um einen Schwerpunkt des Bauteils (9) verläuft, insbesondere genau durch den Schwerpunkt des Bauteils (9) verläuft, oder
die zumindest eine Drehachse durch den Bereich um einen Schwerpunkt des Systems aus dem Bauteil (9), dem Träger (8) und aller sich mit dem Bauteil (9) drehenden Teile des Zentrifugiermoduls (2) verläuft, insbesondere genau durch den Schwerpunkt des Systems verläuft, und **gekennzeichnet durch**
Erzeugen des Bauteils (9) an der so bestimmten Position oder der so bestimmten Position mit der so bestimmten Orientierung auf dem Träger (8) in Schritt A).

5. Verfahren nach Anspruch 4, **dadurch gekennzeichnet, dass**
in Schritt AA) der Schwerpunkt des Bauteils (9) oder des Systems anhand des virtuellen 3D-Modells bestimmt wird und damit die Position oder die Position und die Orientierung des zu erzeugenden Bauteils (9) auf dem Träger (8) bestimmt wird.

6. Verfahren nach einem der vorangehenden Ansprüche, **dadurch gekennzeichnet, dass** die Aushärtung des flüssigen Kunststoffs (7) in Schritt A) durch Licht, UV-Licht oder Laserlicht erfolgt und als flüssiger Kunststoff (7) ein lichtaushärtender Kunststoff (7) verwendet wird, insbesondere ein Acrylharz, Epoxidharz oder Vinylesterharz.

7. Verfahren nach einem der vorangehenden Ansprüche, **dadurch gekennzeichnet, dass** mit dem Verfahren ein Dentalmodell (9) oder ein Modell eines Mundraums zur Aufstellung von Zahnersatz als das Bauteil (9) hergestellt wird oder ein Modell eines Zahnersatzes oder Zahnersatzteils, insbesondere eine Prothesenbasis, als das Bauteil (9) hergestellt wird und in Schritt A) erzeugt wird.

8. Verfahren nach einem der vorangehenden Ansprüche, **gekennzeichnet durch** C) Nachreinigen des Bauteils (9) nach Schritt B) mit einer Reinigungsflüssigkeit, insbesondere mit Isopropanol, wobei Schritt C) nach Schritt B) erfolgt.

9. Verfahren nach Anspruch 8, **gekennzeichnet durch**
Entfernen von Resten der Reinigungsflüssigkeit von der Oberfläche des Bauteils (9) durch eine Zentrifugalkraft aufgrund einer Drehbewegung in Schritt C).

10. Verfahren nach einem der vorangehenden Ansprüche, **gekennzeichnet durch** Schritt D) Nachhärten des Bauteils (9) nach Schritt B), wobei das Bauteil (9) beim Nachhärten um die Drehachse gedreht wird oder um wenigstens eine der Drehachsen gedreht wird, wobei bevorzugt das Nachhärten durch Nachbelichten oder eine Wärmebehandlung oder durch Nachbelichten und eine Wärmebehandlung erfolgt.

11. Verfahren nach einem der vorangehenden Ansprüche, **dadurch gekennzeichnet, dass** in Schritt B) die Drehbewegung in einem Gehäuse (24) erfolgt, wobei die durch die Zentrifugalkraft entfernten Reste des flüssigen Kunststoffs (7) von dem Gehäuse (24) aufgefangen werden.

12. Verfahren nach einem der vorangehenden Ansprüche, **dadurch gekennzeichnet, dass** die Drehbewegung in Schritt B) mit einer Drehgeschwindigkeit zwischen 200 Umdrehungen pro Minute und 1000 Umdrehungen pro Minute erfolgt, bevorzugt mit einer Drehgeschwindigkeit zwischen 300 Umdrehungen pro Minute und 800 Umdrehungen pro Minute erfolgt.

13. Verfahren nach einem der vorangehenden Ansprüche, **gekennzeichnet durch** als Bauteil (9) ein Hohlmodell oder eine Hohlform hergestellt wird.

14. Verfahren nach einem der vorangehenden Ansprüche, **dadurch gekennzeichnet, dass** in Schritt B) das Bauteil (9) mit einem Luftstrom angeblasen wird, insbesondere mit einem Druckluftstrom.

15. Verfahren nach einem der vorangehenden Ansprüche, **dadurch gekennzeichnet, dass** die Winkelgeschwindigkeit der zumindest Drehbewegung und/oder eine Winkelbeschleunigung zum Erreichen der Winkelgeschwindigkeit der zumindest einen Drehbewegung in Abhängigkeit von der Form des Bauteils (9) gesteuert wird, so dass eine Zerstörung oder eine Verformung des Bauteils (9) bei der zumindest einen Drehbewegung vermieden wird.

16. 3D-Drucksystem zur Herstellung eines Bauteils (9) mittels Stereolithographie, das 3D-Drucksystem aufweisend
eine Druckvorrichtung (1) zum ortsabhängigen und schichtweisen Aushärten eines flüssigen Kunststoffs (7),
eine Steuerung (3), insbesondere einen Computer mit einem Computerprogramm, wobei die Steuerung (3) zur Steuerung der Druckvorrichtung (1) nach Schritt A) nach einem der Ansprüche 1 bis 15 gemäß einem virtuellen 3D-Modell eines zu erzeugenden Bauteils (9) geeignet und vorgesehen ist, und
ein Zentrifugiermodul (2), mit dem das mit der Druckvorrichtung (1) erzeugte Bauteil (9) derart mit einer Drehbewegung drehbar ist, dass Reste des flüssigen Kunststoffs (7) von der Oberfläche des Bauteils (9) durch eine Zentrifugalkraft aufgrund der Drehbewegung entfernbar sind,
ein Schwerpunktberechnungsmodul (5) zur Bestimmung der Lage des Schwerpunkts des virtuellen 3D-Modells des Bauteils (9) oder eines virtuellen 3D-Modells eines Systems aus dem Bauteil (9), dem Träger (8) und aller sich mit dem Bauteil (9) drehenden Teile des Zentrifugiermoduls (2), und
ein Positionierungsmodul (4) zur Bestimmung der Position oder der Position und der Orientierung des zu erzeugenden Bauteils (9) in der Druckvorrichtung (1).

17. 3D-Drucksystem nach Anspruch 16, **dadurch gekennzeichnet, dass** das Positionierungsmodul (4) mit dem Schwerpunktberechnungsmodul (5) verbunden ist und auf den vom Schwerpunktberechnungsmodul (5) bestimmten Schwerpunkt Zugriff hat, und dazu programmiert ist, dass die Position oder die Position und die Orientierung des zu erzeugenden Bauteils (9) in der Druckvorrichtung (1) in Abhängigkeit von dem durch das Schwerpunktberechnungsmodul (5) berechneten Schwerpunkts zu bestimmen.

18. 3D-Drucksystem nach einem der Ansprüche 16 oder 17, **dadurch gekennzeichnet, dass**
die Druckvorrichtung (1) eine Halterung (10) zur Befestigung eines Trägers (8) aufweist, wobei das Bauteil (9) auf dem Träger (8) erzeugbar ist, wobei vorzugsweise die Druckvorrichtung (1) wenigstens einen Träger (8) aufweist.

19. 3D-Drucksystem nach einem der Ansprüche 16 bis 18, **gekennzeichnet durch** ein Nachhärtemodul (2) zum Nachhärten des Bauteils (9) mittels Licht oder Temperatur oder mittels Licht und Temperatur, wobei das Bauteil (9) beim Nachhärten in dem Nachhärtemodul (2) drehbar ist und wobei vorzugsweise das Nachhärtemodul einteilig mit dem Zentrifugiermodul (2) ausgeführt ist.

20. 3D-Drucksystem nach einem der Ansprüche 16 bis 19, **dadurch gekennzeichnet, dass** das 3D-Drucksystem zur Umsetzung eines Verfahrens nach einem der Ansprüche 1 bis 15 ausgelegt ist.

## Claims

1. A method for producing a component (9) by means of stereolithography using a centrifuging module (2), the method having the steps of:
A) generating a component (9) in accordance with a virtual 3D model of the component (9) by curing a liquid plastic (7) on a carrier (8) using stereolithography, wherein the component (9) is generated on the carrier (8) in such a way that the component (9) is positioned on the carrier (8) such that
an axis of rotation or at least one of multiple axes of rotation extends through the region of the center of gravity of the component (9), in particular extends through the center of gravity of the component (9), or
the axis of rotation or at least one of the multiple axes of rotation extends through the region of the center of gravity of the system comprising the component (9), the carrier (8) and all parts of the centrifuge module (2) which rotate with the component (9), in particular extends through the center of gravity of the system, and
B) securing the carrier (8) with the component (9) thereon in the centrifuge module (2) for cleaning the component (9) or the carrier (8) with the component (9) thereon is secured in the centrifuge module (2) for cleaning the component (9), cleaning the component (9) through at least one rotational movement of the component (9) about the axis of rotation or about the multiple axes of rotation, wherein residues of the liquid plastic (7) are removed from the surface of the component (9) by a centrifugal force resulting from the rotational movement.

2. The method according to Claim 1, **characterized in that**
at least 50% of the residues of the liquid plastic (7) which are present on the surface of the component (9) are removed by the centrifugal force, preferably at least 85% of the residues of the liquid plastic (7) which are present on the surface of the component (9) are removed by the centrifugal force, particularly preferably at least 95% of the residues of the liquid plastic (7) which are present on the surface of the component (9) are removed by the centrifugal force.

3. The method according to Claim 1 or 2, **characterized in that**
the axis of rotation is specified by the position of the carrier (8) in the centrifuge module (2) or the axes of rotation are specified by the position of the carrier (2) in the centrifuge module (2).

4. The method according to any one of the preceding claims, **characterized by**
AA) specifying the position or the position and the orientation of the component (9) to be generated on the carrier (8) before step A), wherein the component (9) is positioned on the carrier (8) in such a way that
the at least one axis of rotation of the component (9) extends through a region around a center of gravity of the component (9), in particular extends precisely through the center of gravity of the component (9), or
the at least one axis of rotation extends through the region around a center of gravity of the system comprising the component (9), the carrier (8) and all parts of the centrifuge module (2) which rotate with the component (9), in particular extends precisely through the center of gravity of the system, and **characterized by**
generating the component (9) in the thus determined position or the thus determined position with the thus determined orientation on the carrier (8) in step A).

5. The method according to Claim 4, **characterized in that**,
in step AA), the center of gravity of the component (9) or the system is determined with the aid of the 3D model and the position or the position and the orientation of the component (9) to be generated on the carrier (8) is determined thereby.

6. The method according to any one of the preceding claims, **characterized in that** the curing of the liquid plastic (7) in step A) takes place using light, UV light or laser light and a photocurable plastic (7) is used as the liquid plastic (7), in particular an acrylic resin, epoxy resin or vinyl ester resin.

7. The method according to any one of the preceding claims, **characterized in that**, by means of the method, a dental model (9) or a model of an oral cavity for preparing a dental prosthesis is produced as the component (9), or a model of a dental prosthesis or dental prosthesis part, in particular a prosthesis base, is produced as the component (9) and generated in step A).

8. The method according to any one of the preceding claims, **characterized by** C) post-cleaning the component (9) after step B) with a cleaning fluid, in particular with isopropanol, wherein step C) takes place after step B).

9. The method according to Claim 8, **characterized by**
removing residues of the cleaning fluid from the surface of the component (9) by means of a centrifugal force resulting from a rotational movement in step C).

10. The method according to any one of the preceding claims, **characterized by** step D) post-curing the component (9) after step B), wherein, during the post-curing, the component (9) is rotated about the axis of rotation or is rotated about at least one of the axes of rotation, wherein the post-curing preferably takes place via post-exposure to light or a heat treatment or via post-exposure to light and a heat treatment.

11. The method according to any one of the preceding claims, **characterized in that**,
in step B), the rotational movement takes place in a housing (24), wherein the residues of the liquid plastic (7) which are removed by the centrifugal force are caught by the housing (24).

12. The method according to any one of the preceding claims, **characterized in that** the rotational movement in step B) takes place at a rotational speed of between 200 revolutions per minute and 1000 revolutions per minute, preferably at a rotational speed of between 300 revolutions per minute and 800 revolutions per minute.

13. The method according to any one of the preceding claims, **characterized by** a hollow model or a hollow form being produced as the component (9).

14. The method according to any one of the preceding claims, **characterized in that**,
in step B), an air flow, in particular a compressed air flow is blown onto the component (9).

15. The method according to any one of the preceding claims, **characterized in that** the angular speed of the at least one rotational movement and/or an angular acceleration to reach the angular speed of the at least one rotational movement is controlled depending on the form of the component (9) so that destruction or deformation of the component (9) during the at least one rotational movement is prevented.

16. A 3D printing system for producing a component (9) by means of stereolithography, the 3D printing system having
a printing device (1) for position-dependent and layer-wise curing of a liquid plastic (7), a control (3), in particular a computer having a computer program, wherein the control (3) is suitable and provided for controlling the printing device (1) according to step A) according to any one of Claims 1 to 15 in accordance with a virtual 3D model of a component (9) to be generated, and
a centrifuge module (2), with which the component (9) generated by the printing device (1) is rotatable by means of a rotational movement in such a way that residues of the liquid plastic (7) is removable from the surface of the component (9) by a centrifugal force resulting from the rotational movement (1), with
a center-of-gravity calculation module (5) for determining the position of the center of gravity of the virtual 3D model of the component (9) or a virtual 3D model of a system comprising the component (9), the carrier (8) and all parts of the centrifuge module (2) which rotate with the component (9), and
a positioning module (4) for determining the position or the position and the orientation of the component (9) to be generated in the printing device (1).

17. The 3D printing system according to Claim 16, **characterized in that** the positioning module (4) is connected to the center-of-gravity calculation module (5) and has access to the center of gravity determined by the center-of-gravity calculation module (5), and is programmed to determine the position or the position and the orientation of the component (9) to be generated in the printing device (1) depending on the center of gravity calculated by the center-of-gravity calculation module (5).

18. The 3D printing system according to any one of Claims 16 or 17, **characterized in that** the printing device (1) has a holder (10) for securing a carrier (8), wherein the component (9) is generatable on the carrier (8), wherein the printing device (1) preferably has at least one carrier (8).

19. The 3D printing system according to any one of Claims 16 to 18, **characterized by** a post-curing module (2) for post-curing the component (9) by means of light or temperature or by means of light and temperature, wherein the component (9) is rotatable during the post-curing in the post-curing module (2) and wherein the post-curing module is preferably constructed in one piece with the centrifuge module (2).

20. The 3D printing system according to any one of Claims 16 to 19, **characterized in that** the 3D printing system is configured for implementing a method according to any one of Claims 1 to 15.

## Revendications

1. Procédé de fabrication d'un composant (9) par stéréolithographie moyennant l'emploi d'un module de centrifugation (2), le procédé présentant les étapes :
A) de création d'un composant (9) selon les cotes d'un modèle 3D virtuel du composant (9) par le durcissement d'une matière plastique liquide (7) au moyen de la stéréolithographie sur un support (8), où le composant (9) est créé sur le support (8) de telle manière que le composant (9) se trouve positionné sur le support (8) de sorte qu'un axe de rotation, ou au moins un parmi plusieurs axes de rotation, s'étende à travers la zone du centre de gravité du composant (9) et en particulier, s'étende à travers le centre de gravité du composant (9), ou
l'axe de rotation, ou au moins un parmi plusieurs axes de rotation, s'étend à travers la zone du centre de gravité du système à base du composant (9), du support (8) et de tous les éléments tournant autour avec le composant (9) du module de centrifugation (2), en particulier s'étend à travers le centre de gravité du système, et
B) de fixation du support (8) avec le composant (9) au-dessus pour le nettoyage du composant (9) dans le module de centrifugation (2), ou le support (8) avec le composant (9) au-dessus pour le nettoyage du composant (9) fixé dans le module de centrifugation (2), et
de nettoyage du composant (9) par au moins un mouvement de rotation du composant (9) autour de l'axe de rotation ou autour des nombreux axes de rotation, où des restes de la matière plastique liquide (7) sont enlevés de la surface du composant (9) par une force centrifuge en raison du mouvement de rotation.

2. Procédé selon la revendication 1, **caractérisé en ce**
**qu'**au moins 50 % des restes de matière plastique liquide (7) présents sur la surface du composant (9) sont enlevés par la force centrifuge, de préférence, au moins 85 % des restes de matière plastique liquide (7) présents sur la surface du composant (9) sont enlevés par la force centrifuge, de manière particulièrement préférée, au moins 95 % des restes de matière plastique liquide (7) présents sur la surface du composant (9) sont enlevés par la force centrifuge.

3. Procédé selon la revendication 1 ou la revendication 2, **caractérisé en ce que** l'axe de rotation est défini par la position du support (8) dans le module de centrifugation (2) ou les axes de rotation sont définis par la position du support (8) dans le module de centrifugation (2).

4. Procédé selon l'une des revendications précédentes, **caractérisé par**
AA) la détermination de la position, ou de la position et de l'orientation du composant (9) à créer sur le support (8) avant l'étape A), où le composant (9) est positionné sur le support (8) de telle manière que
l'au moins un axe de rotation du composant (9) s'étende à travers une zone autour d'un centre de gravité du composant (9), en particulier, exactement à travers le centre de gravité du composant (9), ou
l'au moins un axe de rotation s'étende à travers la zone autour du centre de gravité du système constitué du composant (9), du support (8) et de tous les éléments tournant avec le composant (9) du module de centrifugation (2), en particulier s'étende exactement à travers le centre de gravité du système, et **caractérisé par** la création du composant (9) à la position ainsi déterminée ou à la position ainsi déterminée avec l'orientation ainsi déterminée sur le support (8) dans l'étape A).

5. Procédé selon la revendication 4, **caractérisé en ce que**
dans l'étape AA), le centre de gravité du composant (9) ou du système est déterminé à l'aide du modèle 3D virtuel et ainsi la position, ou la position et l'orientation, du composant (9) à créer, est déterminée sur le support (8).

6. Procédé selon l'une des revendications précédentes, **caractérisé en ce que** le durcissement de la matière plastique liquide (7) a lieu dans l'étape A) par de la lumière, de la lumière UV ou de la lumière laser, et en tant que matière plastique liquide (7), on utilise une matière plastique durcissable à la lumière (7), en particulier, une résine acrylique, une résine époxyde ou une résine ester de vinyle.

7. Procédé selon l'une des revendications précédentes, **caractérisé en ce qu'**avec le procédé, on fabrique un modèle dentaire (9), ou un modèle d'un espace buccal pour la réalisation d'une prothèse dentaire en tant que composant (9), ou un modèle d'une prothèse dentaire ou d'une partie de prothèse dentaire, en particulier, une base de prothèse est fabriqué en tant que composant (9) et est créé dans l'étape A).

8. Procédé selon l'une des revendications précédentes, **caractérisé par** l'étape C) de nettoyage du composant (9) après l'étape B) avec un liquide de nettoyage, en particulier avec de l'isopropanol, où l'étape C) a lieu après l'étape B).

9. Procédé selon la revendication 8, **caractérisé par**
le retrait de restes de liquide de nettoyage de la surface du composant (9) par une force centrifuge en raison d'un mouvement de rotation dans l'étape C).

10. Procédé selon l'une des revendications précédentes, **caractérisé par** l'étape D) de post-durcissement du composant (9) après l'étape B) , où le composant (9) est enroulé autour de l'axe de rotation lors du post-durcissement ou est enroulé autour d'au moins un des axes de rotation, où, de préférence, le post-durcissement a lieu par une exposition ultérieure à la lumière, ou un traitement thermique, ou par une exposition ultérieure à la lumière et un traitement thermique.

11. Procédé selon l'une des revendications précédentes, **caractérisé en ce que** dans l'étape B), le mouvement de rotation a lieu dans un boitier (24), où les restes de matière plastique liquide (7) enlevés par la force centrifuge sont collectés par le boitier (24).

12. Procédé selon l'une des revendications précédentes, **caractérisé en ce que** le mouvement de rotation dans l'étape B) a lieu avec une vitesse de rotation entre 200 tours par minute et 1000 tours par minute, de préférence, avec une vitesse de rotation entre 300 tours par minute et 800 tours par minute.

13. Procédé selon l'une des revendications précédentes, **caractérisé par le fait qu'**en tant que composant (9), on fabrique un modèle creux ou un moule creux.

14. Procédé selon l'une des revendications précédentes, **caractérisé en ce que** dans l'étape B) le composant est soufflé avec un courant d'air, en particulier, avec un courant d'air sous pression.

15. Procédé selon l'une des revendications précédentes, **caractérisé en ce que** la vitesse angulaire de l'au moins un mouvement de rotation, et/ou une accélération angulaire pour atteindre la vitesse angulaire de l'au moins un mouvement de rotation, est commandée en fonction de la forme du composant (9) de sorte qu'une destruction ou une déformation du composant (9) se trouve empêchée lors de l'au moins un mouvement de rotation.

16. Système d'impression 3D permettant la fabrication d'un composant (9) au moyen de la stéréolithographie, le système d'impression 3D présentant
un dispositif d'impression (1) permettant un durcissement en fonction du lieu et par couches d'une matière plastique liquide (7),
une commande (3), en particulier, un ordinateur avec un programme informatique, où la commande (3) est appropriée et prévue pour la commande du dispositif d'impression (1) du composant (9) à créer après l'étape A) d'après une des revendications 1 à 15, selon un modèle 3D virtuel, et
un module de centrifugation (2) avec lequel le composant (9) créé avec le dispositif d'impression (1) peut être mis en rotation avec un mouvement de rotation de telle manière que des restes de matière plastique liquide (7) puissent être enlevés de la surface du composant (9) par une force centrifuge en raison du mouvement de rotation, un module de calcul de centre de gravité (5) permettant la détermination de la position du centre de gravité du modèle 3D virtuel du composant (9), ou d'un modèle 3D virtuel d'un système à base du composant (9), du support (8) et de tous les éléments tournant avec le composant (9) du module centrifuge (2), et
un module de positionnement (4) permettant la détermination de la position, ou de la position et de l'orientation, du composant (9) à créer dans le dispositif d'impression (1).

17. Système d'impression 3D selon la revendication 16, **caractérisé en ce que** le module de positionnement (4) est relié avec le module de calcul du centre de gravité (5) et a accès au centre de gravité déterminé sur le module de calcul du centre de gravité (5), et est programmé pour déterminer la position, ou la position et l'orientation, du composant (9) à créer dans le dispositif d'impression (1) en fonction du centre de gravité calculé par le module de calcul du centre de gravité (5).

18. Système d'impression 3D selon l'une des revendications 16 ou 17, **caractérisé en ce que**
le dispositif d'impression (1) présente un appui (10) pour la fixation d'un support (8), où le composant (9) peut être fabriqué sur le support (8), où, de préférence, le dispositif d'impression (1) présente au moins un support (8).

19. Système d'impression 3D selon l'une des revendications 16 à 18, **caractérisé par** un module de post-durcissement (2) permettant le post-durcissement du composant (9) au moyen de la lumière, ou de la température, ou au moyen de la lumière et de la température, où le composant (9) peut être mis en rotation lors du post-durcissement dans le module de post-durcissement (2), où, de préférence, le module de post-durcissement est conçu en une seule pièce avec le module de centrifugation (2).

20. Système d'impression 3D selon l'une des revendications 16 à 19, **caractérisé en ce que** le système d'impression 3D est conçu pour la mise en oeuvre d'un procédé selon l'une des revendications 1 à 15.
